# EUROPÄISCHE PATENTSCHRIFT

(11) **EP 2 126 290 B1**
(45) Veröffentlichungstag und Bekanntmachung des Hinweises auf die Patenterteilung: **02.06.2010**
(21) Anmeldenummer: 08735538.4
(22) Anmeldetag: 27.03.2008
(51) Int. Cl.: F01D 25/00, F02B 77/04, F02C 7/30, F02B 37/00

(54) **REINIGUNGSVORRICHTUNG**
CLEANING DEVICE
DISPOSITIF DE NETTOYAGE

(30) Priorität: 27.03.2007 EP 07104993
(43) Veröffentlichungstag der Anmeldung: 02.12.2009
(73) Patentinhaber: ABB Turbo Systems AG, 5400 Baden (CH)
(72) Erfinder: SCHÖNBÄCHLER, Fabian, 8037 Zürich (CH); JARUSEL, Matthias, 79774 Albbruck (DE); NEUENSCHWANDER, Peter, 8006 Zürich (CH)
(74) Vertreter: ABB Patent Attorneys
(86) Internationale Anmeldenummer: PCT/EP2008/053685
(87) Internationale Veröffentlichungsnummer: WO 2008/116923

(56) Entgegenhaltungen:
- EP-A- 0 848 150
- WO-A-2007/031599
- CH-A5- 660 056
- US-A- 4 548 040

## Beschreibung

### Technisches Gebiet

Die Erfindung bezieht sich auf das Gebiet der Abgasturbolader für aufgeladene Brennkraftmaschinen. Sie betrifft eine Reinigungsvorrichtung sowie eine Abgasturbine mit einer solchen Reinigungsvorrichtung.

### Stand der Technik

Abgasturbolader werden zur Leistungssteigerung von Brennkraftmaschinen, insbesondere Hubkolbenmotoren, eingesetzt. Dabei besitzt ein Abgasturbolader üblicherweise einen Radialverdichter und eine Radial- oder Axialturbine. Abgasturbinen können auch als Nutzturbine eingesetzt werden, wobei anstelle eines Verdichters ein elektrischer Generator oder eine andere Nutzmaschine über die Turbinenwelle angetrieben wird.

In Abhängigkeit von der konkreten Betriebssituation und der Zusammensetzung der zum Antrieb der Brennkraftmaschine verwendeten Brennstoffe, kommt es in der Abgasturbine früher oder später zu einer Verschmutzung der Turbinenschaufeln am Laufrads, der Leitschaufeln des Düsenringes und der verschiedenen Turbinengehäuseteile. Solche Schmutzablagerungen führen im Bereich des Düsenrings u. a. zu einem schlechteren Turbinenwirkungsgrad und demzufolge zur Verringerung der Leistung der nachfolgenden Maschinen, beispielsweise des mittels Abgasturbine angetriebenen Verdichters und allenfalls der aufgeladenen Brennkraftmaschine selbst. Als Folge dessen kommt es zu einer Erhöhung der Abgastemperaturen im Brennraum, wodurch sowohl die Brennkraftmaschine als auch der Turbolader thermisch überbeansprucht oder grössere Emissionen verursachen werden können. Bei der Brennkraftmaschine kann insbesondere eine Beschädigung oder gar Zerstörung der Auslassventile auftreten.

Deshalb müssen Düsenring, Turbinenschaufeln und betroffene Bereiche des Turbinengehäuses regelmässig von ihnen anhaftenden Verschmutzungen befreit werden. Eine Reinigung dieser Bauteile in demontiertem Zustand erfordert das Abschalten des Turboladers über einen längeren Zeitraum und ist daher nicht erwünscht. Demzufolge haben sich in der Praxis Reinigungsverfahren durchgesetzt, bei denen der Turbolader in Betrieb bleiben kann und nicht demontiert werden muss. Als geeignete Verfahren zur Beseitigung von Düsenring-Verschmutzungen sind die Nassreinigung mit Wasser und die Trockenreinigung mit einem Granulat bekannt. Die Einspeisung des jeweiligen Reinigungsmediums erfolgt stromauf des Turbinenrades, im Bereich der die Brennkraftmaschine mit der Abgasturbine verbindenden Abgasleitung, in welche eine Einblasstelle eingelassen ist.

Bei der Trockenreinigung wird die Reinigungssubstanz aus einem Trockenreinigungsbehälter über eine Zuleitung zur Einblasstelle geführt.

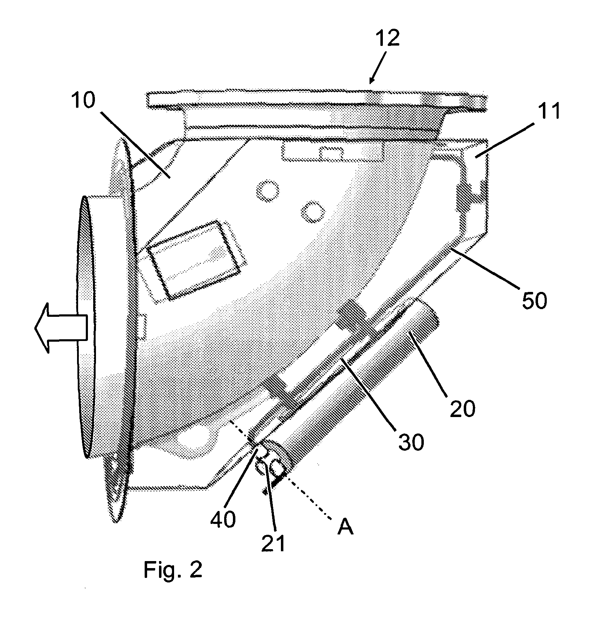

Bei herkömmlichen Lösungen ist die Distanz und Richtung der Verbindung zwischen Trockenreinigungsbehälter und Einblasstelle am Gaseintritt stutzenstellungsabhängig. Je nach Anordnung des Abgasturboladers bezüglich der Brennkraftmaschine werden die Gaszuführungsleitungen in unterschiedlichen Winkeln zum Turbinengehäuse geführt. Um die grösstmögliche Flexibilität zu bieten, sind die Gaseintrittsstutzen moderner Abgasturbinen deshalb um die Turbinenachse in mehreren Positionen montierbar, etwa den mit a bezeichneten Winkel in Fig. 2. Deswegen müssen jedoch entweder flexible Rohre respektive Schläuche oder der Stutzenstellung angepasste Rohre verwendet werden, um den Trockenreinigungsbehälter mit der Einblasstelle zu verbinden.

Der Trockenreinigungsbehälter kann auch fix am Gaseintritt befestigt werden, doch wäre in diesem Fall die Montagerichtung des Behälters bei gewissen Stutzenstellungen für den Betrieb ungeeignet, da der Trockenreinigungsbehälter vorteilhafterweise möglichst lotrecht angeordnet sein soll.

### Kurze Darstellung der Erfindung

Die Aufgabe der vorliegenden Erfindung besteht darin, eine Reinigungsvorrichtung für eine Abgasturbine derart zu verbessern, dass sie unabhängig von der Stutzenstellung optimal montiert und eingesetzt werden kann.

Erfindungsgemäss wird hierfür der Reinigungsbehälter relativ zum Gaseintrittsgehäuse bewegbar, insbesondere drehbar, angeordnet.

Wird der Reinigungsbehälter am Gaseintritt je nach Stutzenstellung relativ zum Gaseintrittsgehäuse in einer anderen Richtung montiert, kann die Funktion der Reinigungseinrichtung für verschiedene Stutzenstellungen gewährleistet werden, indem sie immer möglichst lotrecht steht.

Die Distanz und Richtung zwischen der Verbindungsstelle des Trockenreinigungsbehälters und der Einblasstelle in den Gaseintritt kann konstant gehalten werden, indem sich der Austritt des Reinigungsbehälters unabhängig von der Montagerichtung am gleichen Ort befindet. Dies wird erfindungsgemäss dadurch erreicht, dass der Reinigungsbehälter um ein Zuleitungsrohr drehbar angeordnet ist.

Die Rohrleitung kann über oder unter der Gaseintrittsgehäuseisolation verlaufen.

### Kurze Beschreibung der Zeichnungen

Nachfolgend wird eine Ausführungsform der Erfindung anhand von Zeichnungen detailliert erläutert. Hierbei zeigt
- Fig. 1: eine Seitenansicht eines Abgasturboladers gemäss dem Stand der Technik,
- Fig. 2: den Gaseintrittsgehäuse-Stutzen des Abgasturboladers nach Fig. 1 in einer Seitenansicht, mit aufgesetztem Reinigungsbehälter mit einer erfindungsgemässen Verbindung zur Zuleitung zur Einblasöffnung, und
- Fig. 3: den Gaseintrittsgehäuse-Stutzen nach Fig. 2 in axialer Richtung betrachtet.

### Weg zur Ausführung der Erfindung

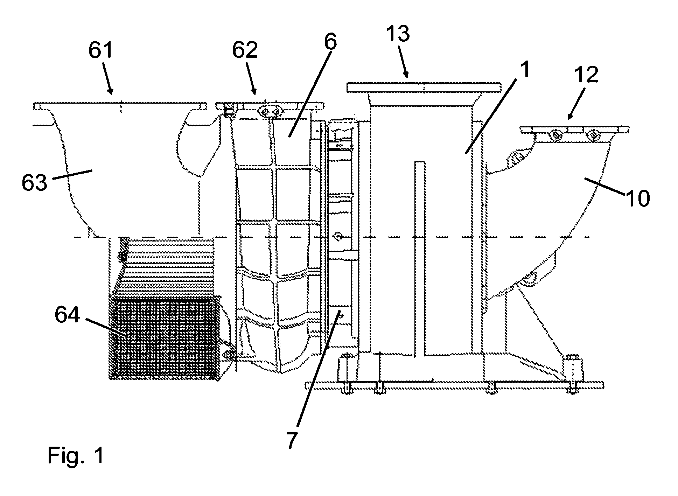

Fig. 1 zeigt in Seitenansicht entlang seiner Längsachse einen Abgasturbolader gemäss dem Stand der Technik. Der Abgasturbolader umfasst einen Verdichter in einem Verdichtergehäuse 6 sowie eine Abgasturbine in einem Turbinengehäuse 1. Dazwischen ist das Lagergehäuse 7 angeordnet, in welchem die Welle des Abgasturboladers drehbar gelagert ist. Das Verdichtergehäuse umfasst einen Lufteintritt 61 von wo aus die Luft über das Verdichterrad und einen spiralförmigen Sammelbehälter dem Luftaustritt 62 zugeführt wird. Lufteintrittsseitig kann anstelle eines Luftansaugstutzens 63 auch ein Schalldämpfer 64 angeordnet sein.

Turbinenseitig wird das Abgas durch die Gaseintrittsöffnung 12 im Gaseintrittsstutzen 10 auf das Turbinenrad geleitet und anschliessend durch die Gasaustrittsöffnung 13 dem Auspuff zugeführt.

Fig. 2 zeigt einen Gaseintrittsstutzen 10 der Abgasturbine im demontierten Zustand. Der Stutzen ist umgeben von einer thermischen Isolation 11. Am Stutzen befestigt ist zudem ein Reinigungsbehälter 20 einer Reinigungsvorrichtung. Die Reinigungsvorrichtung umfasst weiter eine Montagevorrichtung 30, ein Zuleitungsrohr 40 sowie eine Zuleitung 50 zur Eintrittsöffnung in dem Gaseintrittsstutzen.

Der Reinigungsbehälter 30 ist erfindungsgemäss an der Montagevorrichtung befestigt und lässt sich um einen fixen Punkt entlang der Ebene der Montagevorrichtung drehen. Somit kann der Reinigungsbehälter je nach Winkelstellung des Gaseintrittsstutzens 10 entlang der Ebene der Montagevorrichtung in die Lotrechte verschoben werden.

Als Drehachse A für den Reinigungsbehälter 20 dient das senkrecht zur Ebene der Montagevorrichtung angeordnete Zuleitungsrohr 40. Dieses Rohr wird von einer Zuleitungsrohraufname 21, beispielsweise einer Ventileinheit oder einem Fitting, umschlossen oder mündet direkt in einer seitlich im Reinigungsbehälter 20 angeordneten Öffnung.

Die Zuleitung 50 vom Zuleitungsrohr 40 bis zur Eintrittsöffnung in dem Gaseintrittsstutzen kann entlang dem Gehäuse, wahlweise unterhalb oder auf der Isolation 11 geführt werden.

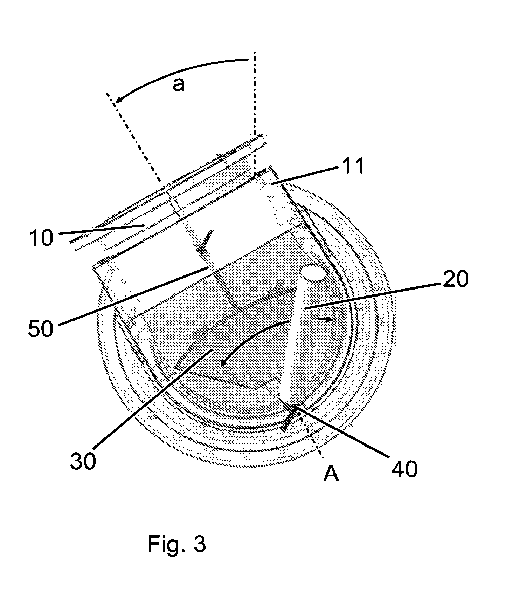

Fig. 3 zeigt die Reinigungsvorrichtung in Richtung der Turbinenachse betrachtet. Dabei ist die Montagevorrichtung 30, welche in diesem Beispiel fächerförmig ausgebildet ist, und entlang deren äusseren Randes der Reinigungsbehälter mit einem entsprechenden Führungsteil verschiebbar ist, im Detail zu sehen.

### Bezugszeichenliste

- 1: Turbinengehäuse
- 6: Verdichtergehäuse
- 7: Lagergehäuse
- 10: Gaseintrittsstutzen
- 11: Gehäuseisolation
- 12: Gaseintrittsöffnung
- 13: Gasaustrittsöffnung
- 20: Reinigungsbehälter
- 21: Zuleitungsrohraufnahme
- 30: Montagevorrichtung
- 40: Zuleitungsrohr
- 50: Zuleitung
- 61: Lufteinlassöffnung
- 62: Luftaustrittsöffnung
- 63: Ansaugstutzen
- 64: Filterschalldämpfer

## Patentansprüche

1. Reinigungsvorrichtung für eine Abgasturbine, umfassend einen Reinigungsbehälter (20) sowie eine Montagevorrichtung (30) zum Befestigen des Reinigungsbehälters (20) an einem Turbinengehäuse (10), **dadurch gekennzeichnet, dass** der Reinigungsbehälter entlang der Montagevorrichtung um eine Achse (A) drehbar ist.

2. Reinigungsvorrichtung nach Anspruch 2, wobei die Montagevorrichtung sich entlang einer Ebene erstreckt und die Achse (A) senkrecht zu dieser Ebene steht.

3. Reinigungses vorrichtung nach einem der Ansprüche 1 oder 2, wobei der Reinigungsbehälter (20) um eine Rohrleitung (40) drehbar angeordnet ist.

4. Reinigungs vorrichtung nach Anspruch 3, wobei die Rohrleitung (40) senkrecht zur Montagevorrichtung (30) in den Reinigungsbehälter (20) eintritt.

5. Reinigungs vorrichtung nach Anspruch 3, wobei die Rohrleitung (40) senkrecht zur Montagevorrichtung (30) angeordnet ist und mittels einer Zuleitungsrohraufnahme (21) mit dem Reinigungsbehälter (20) verbunden ist, wobei der Reinigungsbehälter (20) mit der Zuleitungsrohraufnahme (21) um die Rohrleitung (40) drehbar ist.

6. Abgasturbine, umfassend ein Turbinengehäuse (10) und eine Reinigungsvorrichtung mit einem Reinigungsbehälter (20) sowie einer Montagevorrichtung (30) zum Befestigen des Reinigungsbehälters (20) an dem Abgasturbinengehäuse (10), **dadurch gekennzeichnet, dass** der Reinigungsbehälter entlang der Montagevorrichtung um eine Achse (A) drehbar ist.

7. Abgasturbine nach Anspruch 6, wobei die Montagevorrichtung sich entlang einer Ebene erstreckt und die Achse (A) senkrecht zu dieser Ebene steht.

8. Abgasturbolader mit einer Abgasturbine nach einem der Ansprüche 6 oder 7.

## Claims

1. Cleaning device for an exhaust gas turbine, comprising a cleaning container (20) and a mounting device (30) for fastening the cleaning container (20) to a turbine casing (10),
**characterized in that** the cleaning container is rotatable about an axis (A) along the mounting device.

2. Cleaning device according to Claim 1, the mounting device extending along one plane, and the axis (A) standing perpendicularly to this plane.

3. Cleaning device according to either one of Claims 1 and 2, the cleaning container (20) being arranged rotatably about a pipeline (40).

4. Cleaning device according to Claim 3, the pipeline (40) entering the cleaning container (20) perpendicularly to the mounting device (30).

5. Cleaning device according to Claim 3, the pipeline (40) being arranged perpendicularly to the mounting device (30) and being connected to the cleaning container (20) by means of a delivery-pipe receptacle (21), the cleaning container (20) being rotatable, together with the delivery-pipe receptacle (21), about the pipeline (40).

6. Exhaust gas turbine, comprising a turbine casing (10) and a cleaning device with a cleaning container (20) and with a mounting device (30) for fastening the cleaning container (20) to the exhaust gas turbine casing (10), **characterized in that** the cleaning container is rotatable about axis (A) along the mounting device.

7. Exhaust gas turbine according to Claim 6, the mounting device extending along one plane, and the axis (A) standing perpendicularly to this plane.

8. Exhaust gas turbocharger with an exhaust gas turbine according to either one of Claims 6 and 7.

## Revendications

1. Dispositif de nettoyage pour une turbine à gaz d'échappement, comprenant un récipient de nettoyage (20) ainsi qu'un dispositif de montage (30) pour la fixation du récipient de nettoyage (20) à un carter de turbine (10), **caractérisé en ce que** le récipient de nettoyage peut tourner autour d'un axe (A) le long du dispositif de montage.

2. Dispositif de nettoyage selon la revendication 1, dans lequel le dispositif de montage s'étend le long d'un plan et l'axe (A) est perpendiculaire à ce plan.

3. Dispositif de nettoyage selon l'une quelconque des revendications 1 ou 2, dans lequel le récipient de nettoyage (20) est disposé de manière à pouvoir tourner autour d'une conduite tubulaire (40).

4. Dispositif de nettoyage selon la revendication 3, dans lequel la conduite tubulaire (40) entre perpendiculairement au dispositif de montage (30) dans le récipient de nettoyage (20).

5. Dispositif de nettoyage selon la revendication 3, dans lequel la conduite tubulaire (40) est disposée perpendiculairement au dispositif de montage (30) et est connectée au moyen d'un logement tubulaire de conduite d'amenée (21) au récipient de nettoyage (20), le récipient de nettoyage (20) pouvant tourner avec le logement tubulaire de conduite d'amenée (21) autour de la conduite tubulaire (40).

6. Turbine à gaz d'échappement, comprenant un carter de turbine (10) et un dispositif de nettoyage avec un récipient de nettoyage (20) ainsi qu'un dispositif de montage (30) pour la fixation du récipient de nettoyage (20) sur le carter de la turbine à gaz d'échappement (10), **caractérisée en ce que** le récipient de nettoyage peut tourner le long du dispositif de montage autour d'un axe (A).

7. Turbine à gaz d'échappement selon la revendication 6, dans laquelle le dispositif de montage s'étend le long d'un plan et l'axe (A) est perpendiculaire à ce plan.

8. Turbocompresseur à gaz d'échappement comprenant une turbine à gaz d'échappement selon l'une quelconque des revendications 6 ou 7.
